# FASCICULE DE BREVET EUROPEEN

(11) **EP 4 284 162 B1**
(45) Date de publication et mention de la délivrance du brevet: **07.05.2025**
(21) Numéro de dépôt: 22702002.1
(22) Date de dépôt: 28.01.2022
(51) Int. Cl.: A01K 47/00, A01K 47/06

(54) **PARTITION POUR RUCHE**
TRENNWAND FÜR EINEN BIENENSTOCK
PARTITION FOR A HIVE

(30) Priorité: 28.01.2021 FR 2100840
(43) Date de publication de la demande: 06.12.2023
(73) Titulaire: Surface Composee Production et Assemblage, 31220 Saint-Julien-sur-Garonne (FR)
(72) Inventeur: DULAURIE, Laurent, 32810 LEBOULIN (FR); BUGEAUD, Laurent, 31220 SAINT-JULIEN-SUR-GARONNE (FR); MICHIELS, Frédéric, 31220 SAINT-JULIEN-SUR-GARONNE (FR); CHANEL, Jean-Luc, 31220 SAINT-JULIEN-SUR-GARONNE (FR)
(74) Mandataire: Argyma
(86) Numéro de dépôt international: PCT/EP2022/052136
(87) Numéro de publication internationale: WO 2022/162194

(56) Documents cités:
- WO-A1-2010/098853
- WO-A1-2010/098853
- WO-A1-2018/165051
- WO-A1-2018/165051
- FR-A1- 3 069 412
- FR-A1- 3 069 412

## Description

### Domaine technique

La présente invention concerne le domaine de l'apiculture et plus particulièrement une partition pour ruche ainsi qu'une ruche comprenant au moins une telle partition. L'invention vise notamment à améliorer l'isolation des ruches existantes.

### Etat de la technique antérieure

De manière connue, une ruche se présente sous la forme d'une boite, généralement réalisée en bois, de forme parallélépipédique et comportant un plancher, une paroi avant, une paroi arrière, deux parois latérales et un couvercle de toit amovible.

Il est connu d'insérer des cadres de corps côte-à-côte à l'intérieur de la ruche, parallèlement aux parois latérales, afin d'accueillir la ponte d'œufs par la reine des abeilles ou encore afin d'y stocker du pollen ou du miel destiné à nourrir les abeilles ou les larves. Plus précisément, chaque cadre de corps se présente sous la forme d'un châssis amovible comportant quatre bordures minces en bois clouées ou collées entre elles de sorte à former un cadre rectangulaire. Les bordures du cadre sont reliées par des fils de fer entre lesquels est insérée une feuille de cire gaufrée sur laquelle les abeilles construisent des alvéoles pour produire les rayons de miel. Afin de dégager les cadres collés par la propolis pour les retirer de la ruche, l'apiculteur utilise un outil connu sous le nom de pince lève-cadre.

De manière connue, le premier et le dernier cadre de l'ensemble peuvent être utilisés pour permettre aux abeilles ouvrières de constituer des stocks de miel de réserve non-accessibles à la reine de la ruche en passant sur les côtés ou sous le deuxième cadre de corps et l'avant-dernier cadre de corps. Ce faisant, seuls les bords inférieurs et latéraux du premier et du dernier cadre de corps se retrouvent remplis de miel en premier, empêchant par la suite l'accès au centre de la cire gaufrée du premier et du dernier cadre de corps, ce qui présente un inconvénient.

De plus, on a constaté avec le temps que le froid pouvait être dévastateur pour les abeilles et donc pour la production du miel de la ruche. Aussi, dans ce cas, il est connu de calfeutrer le deuxième cadre et l'avant-dernier cadre de la ruche à l'aide d'un matériau isolant souple fixé sur le cadre, tel que, par exemple, du polyuréthane ou du papier à bulles.

Il s'avère toutefois que ces matériaux isolants peuvent être soit volumineux et peu efficace thermiquement dans le cas du polyuréthane, soit fragiles dans le cas du papier à bulles et donc pouvant être facilement endommagés, notamment perforés ou déchirés lors de l'extraction du cadre de corps avec une pince lève-cadre ou lors d'attaques par des nuisibles tels que des rongeurs ou des insectes, par exemple des fausses teignes. Notamment, lorsque les matériaux isolants sont endommagés, le cadre se retrouve moins bien calfeutré et peut présenter un défaut d'isolation.

Par ailleurs, les abeilles doivent circuler sous et sur les côtés des cadres calfeutrés pour accéder au premier cadre et au dernier cadre afin d'y produire du miel. Autrement dit, les abeilles peuvent avoir des difficultés à contourner les cadres calfeutrés et donc à produire des alvéoles et du miel sur la totalité de la feuille de cire gaufrée du premier et du dernier cadre, notamment en leur centre, ce qui diminue le rendement de la ruche.

Il existe donc le besoin d'une solution simple, fiable et efficace afin de remédier au moins en partie à ces inconvénients. Une partition rayonnante pour ruche est connue du document WO2018/165051.

### Exposé de l'invention

A cette fin, l'invention concerne tout d'abord une partition rayonnante pour ruche d'abeilles, ladite ruche comprenant un plancher, une paroi avant, deux parois latérales, une paroi arrière, un couvercle de toit amovible, ladite partition rayonnante comprenant un panneau rigide monobloc, de préférence de forme sensiblement rectangulaire, réalisé en au moins un matériau isolant dont au moins l'une des deux faces est recouverte au moins en partie d'au moins une couche d'un matériau rayonnant, la partition rayonnante étant configurée pour être insérée entre la paroi avant et la paroi arrière de la ruche d'abeilles afin d'isoler l'intérieur de la ruche.

Autrement dit, le panneau comprend au moins deux éléments : un panneau réalisé en un matériau isolant et au moins une couche recouvrant au moins l'une des faces du panneau, de préférence la face située du côté du centre de la ruche, réalisée en un matériau rayonnant. Ainsi, la partition rayonnante permet de protéger les abeilles présentes dans la ruche des variations de températures et notamment du froid. Comme elle isole et elle rayonne l'énergie thermique en même temps, la partition peut ainsi être qualifiée d'iso-rayonnante. L'utilisation d'un panneau, qui constitue le corps de la partition rayonnante, confère solidité et isolation à la ruche, tandis que la couche rayonnante augmente l'efficacité de l'isolation au froid en permettant une conservation importante de la chaleur à l'intérieur de la ruche.

Par les termes « matériau rayonnant », on entend un matériau apte à réfléchir en grande partie l'énergie thermique, par exemple plus de 50 % de l'énergie thermique qu'il reçoit.

Selon une caractéristique de l'invention, la couche de matériau rayonnant présente une émissivité thermique inférieure à 0,2, de préférence inférieure à 0,1 afin d'augmenter le pouvoir d'isolation du panneau et donc de la ruche.

De préférence, la couche de matériau rayonnant comprend ou est constituée d'aluminium non oxydé ou poli, l'aluminium non oxydé ou poli présentant de bonnes caractéristiques de rayonnement (émissivité thermique de l'ordre de 0,09 pour l'aluminium non oxydé et de l'ordre de 0,05 pour l'aluminium poli), ou de tout autre matériau adapté, de préférence dont l'émissivité thermique est inférieure ou égale à 0,10, tel que par exemple le zinc poli (0,03) ou oxydé (0,10), le cuivre poli (0,03) ou le laiton poli (0,03 à 0,05), ou inférieure ou égale à 0,20 tel que par exemple l'inox (0,20), l'acier poli (0,20) ou le fer non oxydé (0,20).

Dans une forme de réalisation, la couche de matériau rayonnant recouvre intégralement l'au moins une face du panneau.

Dans une autre forme de réalisation, la couche de matériau rayonnant recouvre l'au moins une face du panneau sur au moins 50 %, voire au moins 70 %, de préférence au moins 80 % de sa surface.

La couche de matériau rayonnant peut être fixée sur la face du panneau, par exemple par collage, agrafage, clouage, pressage ou tout autre moyen de fixation adapté. En variante, la couche de matériau rayonnant peut être une peinture apposée sur la face ou les faces du panneau.

Dans une forme de réalisation, une seule face de la partition rayonnante comporte une couche de matériau rayonnant, c'est-à-dire qu'une seule face du panneau isolant est recouverte d'au moins une couche d'un matériau rayonnant.

Dans une autre forme de réalisation, les deux faces de la partition rayonnante comportent chacune une couche de matériau rayonnant, d'un matériau identique ou différent.

De préférence, le panneau de la partition rayonnante est réalisé en bois massif, tel que du balsa ou tout autre bois massif à haute capacité d'isolation.

Dans une autre forme de réalisation, le panneau est réalisé en contreplaqué, par exemple de type CTB-X, CTB-H ou tout autre type de contreplaqué adapté. Notamment, l'âme du panneau peut être réalisée en un matériau de type polyuréthane ou polystyrène, en particulier de polystyrène extrudé (par exemple de type Styrodur^{®}), disposé entre deux couches de placage en bois, par exemple collées.

Dans une autre forme de réalisation, le panneau est un panneau de grandes particules orientées OSB (Oriented Strand Board).

Dans une autre forme de réalisation, le panneau est réalisé en bois latté.

Ces différents matériaux sont rigides et solides et permettent d'isoler efficacement la ruche.

De manière avantageuse, la partition rayonnante présente un caractère imputrescible, notamment en étant recouverte d'une huile de protection, par exemple d'huile de lin.

De préférence, la partition rayonnante comprend au moins un organe d'insertion apte à recevoir un outil d'extraction permettant d'extraire ladite partition rayonnante du corps de ruche. L'outil d'extraction est par exemple une pince lève-cadre. Ainsi, l'outil d'extraction coopère avec l'organe d'insertion de sorte que l'apiculteur peut rapidement et aisément extraire la partition rayonnante de la ruche sans toutefois endommager la partition rayonnante.

De préférence encore, l'organe d'insertion se présente sous la forme d'une rainure formée au niveau de la partie supérieure d'au moins une des deux faces de la partition rayonnante.

De préférence, la partition rayonnante étant délimitée par un bord supérieur, un bord inférieur, deux bords latéraux en présentant deux faces, chacune des faces reliant le bord supérieur, le bord inférieur et les bords latéraux, la rainure est formée à moins de deux centimètres du bord supérieur ou des bords latéraux de la partition rayonnante. La rainure peut être horizontale ou verticale. De cette façon, un apiculteur peut facilement et rapidement extraire la partition rayonnante par effet de levier en insérant un lève-cadre dans la rainure.

Dans une autre forme de réalisation, l'organe d'insertion est une anse ou un crochet dans lequel un outil d'extraction peut s'insérer.

De préférence, la partition rayonnante est pleine. Autrement dit, la partition rayonnante est remplie de matière sur 100% de sa surface.

Dans une autre forme de réalisation, la partition rayonnante est pleine sur au moins 80 % de sa surface, de préférence plus de 90 % de sorte à délimiter au moins une ouverture traversante.

Plus la partition rayonnante est pleine sur une surface importante, plus l'isolation thermique de la ruche est améliorée.

De préférence, la partition rayonnante délimite au moins une ouverture traversante et comprend une grille, montée dans ladite ouverture traversante et adaptée pour empêcher la reine de la ruche de traverser l'ouverture tout en autorisant les abeilles ouvrières à la traverser. Autrement dit, les ouvertures de la grille sont dimensionnées de sorte à permettre le passage des abeilles ouvrières tout en empêchant la reine de la ruche de traverser la grille.

Avantageusement, l'au moins ouverture traversante est disposée à proximité du bord inférieur, c'est à dire au niveau de la partie inférieure de la partition rayonnante. En effet, dans une ruche, la chaleur monte dans la partie supérieure du corps de la ruche. Ainsi, les abeilles se déplacent plutôt vers la partie supérieure du corps afin de profiter de la chaleur et moins vers la partie inférieure du corps de la ruche, plus froid. Il est donc plus adapté de positionner une ouverture traversante dans la partie inférieure de chaque partition rayonnante. De cette façon, moins d'abeilles se trouveront devant l'ouverture traversante et les abeilles souhaitant circuler de part et d'autres de la grille pourront le faire plus aisément que si l'ouverture traversante était formée dans la partie supérieure de la partition, plus encombrée.

Dans une forme de réalisation, l'épaisseur de la partition rayonnante est comprise entre 24 et 25 mm, ce qui correspond à l'épaisseur standard d'un cadre de corps d'une ruche Dadant, afin de pouvoir positionner la partition rayonnante à l'emplacement d'un cadre de corps dans une telle ruche.

Dans une autre forme de réalisation, l'épaisseur de la partition rayonnante est comprise entre 10 et 12 mm, ce qui est de l'ordre de la moitié de la valeur de l'épaisseur d'un cadre d'une ruche Dadant. Ainsi, deux partitions rayonnantes occuperont l'espace d'un seul cadre de corps d'une ruche Dadant, ce qui permet de ne supprimer qu'un cadre de corps lorsque deux partitions rayonnantes sont placées dans la ruche. Autrement dit, il n'est pas nécessaire de retirer deux cadres de corps mais un seul cadre de corps pour placer deux partitions rayonnantes dans la ruche en occupant la même épaisseur.

De préférence, la couche de matériau rayonnant est fixée à l'aide de rivets double tête ou de paires de vis hublot. Une telle liaison mécanique est particulièrement adaptée pour fixer la couche de matériau rayonnant sur le panneau et sa solidité permet d'éviter le décollement de la couche de matériau rayonnant lorsque de la propolis et/ou de la cire qui était collée sur la couche de matériau rayonnant et/ou sur les bords du panneau est retirée.

Dans une forme de réalisation, la partition rayonnante comprend au moins un élément de chauffage et est dite « partition rayonnante chauffante ».

L'au moins un élément de chauffage peut être intégré dans le panneau de la partition rayonnante chauffante, notamment dans un logement, ou monté sur une face ou un bord de la partition rayonnante chauffante.

De préférence, l'au moins un élément de chauffage est alimenté électriquement, par exemple via un câble électrique, par une source d'alimentation électrique (interne ou externe à la ruche).

Dans une forme de réalisation, la partition peut comprendre au moins une borne ou une broche métallique saillante de type « mâle » permettant de connecter l'au moins un élément de chauffage à une source d'alimentation électrique. L'utilisation d'une ou plusieurs bornes ou broches de type « mâle » permettant d'éviter la présence d'un orifice de branchement que les abeilles pourraient boucher, par exemple avec un mélange de propolis et/ou de cire.

En variante ou en complément, la partition peut comprendre un ou plusieurs fils électriques s'étendant depuis un bord du panneau pour relier l'au moins un élément électrique à une source d'alimentation électrique. Dans ce cas, lorsque la partition est montée dans la ruche, il suffit de disposer l'extrémité libre du ou des câbles à l'extérieur de la ruche et de replacer le couvercle puis de brancher le ou les fils, par exemple via un ou plusieurs connecteurs à la source d'alimentation électrique.

Avantageusement, l'épaisseur de l'au moins un élément de chauffage est inférieure à 3 mm, de préférence de l'ordre de 1 mm.

Avantageusement, l'au moins un élément de chauffage intégré est de type résistance, qui est un moyen simple et efficace pour générer du chauffage.

De préférence, l'au moins un élément de chauffage est collé sur la couche rayonnante.

Dans une forme de réalisation particulière, l'au moins un élément de chauffage est une résistance de faible épaisseur, moins de 3 mm, logée dans un logement prévu à cet effet, formé sur une face du panneau de la partition en étant collée sur la couche de matériau rayonnant qui recouvre la face du panneau. De la sorte, la chaleur générée par l'élément de chauffage est transmise par conduction à travers la couche de matériau rayonnant et le bois sert d'isolant pour renvoyer la chaleur.

Avantageusement encore, la partition rayonnante chauffante comprend quatre résistances s'étendant longitudinalement montées sur l'une des faces de la partition rayonnante chauffante, dont deux sont disposées chacune en s'étendant le long d'un bord latéral du panneau, une est disposée en s'étendant le long du bord inférieur du panneau et une est disposée dans la partie supérieure du panneau en s'étendant transversalement.

Dans une forme de réalisation, la partition comprend au moins une sonde de température apte à être reliée à un module de contrôle.

L'invention concerne également une ruche pour abeilles comprenant un plancher, une paroi avant, deux parois latérales, une paroi arrière, un couvercle de toit amovible, au moins un cadre de corps, chaque cadre de corps se présentant sous la forme d'un châssis amovible de la ruche, ledit châssis comportant quatre bordures minces reliées par des fils métalliques entre lesquels est insérée une feuille de cire gaufrée permettant la production de miel par les abeilles, ladite ruche étant remarquable en ce qu'elle comprend en outre au moins une partition rayonnante telle que présentée précédemment.

De préférence, la ruche pour abeilles comprend au moins quatre cadres de corps, une première partition rayonnante telle que présentée précédemment et une deuxième partition rayonnante telle que présentée précédemment, chaque cadre de corps étant disposé verticalement dans la ruche entre la paroi avant et la paroi arrière, la première partition étant placée dans la ruche entre un premier cadre de corps, adjacent à l'une des parois latérales de la ruche, et un deuxième cadre de corps, la deuxième partition rayonnante étant placée entre un troisième cadre de corps et un quatrième cadre de corps, adjacent à l'autre paroi latérale de la ruche.

La première partition rayonnante et la deuxième partition rayonnante permettent ainsi d'isoler efficacement l'intérieur du corps de la ruche situé entre la première partition rayonnante et la deuxième partition rayonnante. De cette façon, les abeilles se déplaçant dans cette zone sont également protégées du froid. De plus, le premier cadre de corps et le dernier cadre de corps ne sont accessibles que par les abeilles et non par la reine de la ruche. De cette façon, les premier et dernier cadres de corps ont un unique rôle de production, autrement dit de réserve, de miel.

Dans une autre forme de réalisation, la ruche comporte une pluralité de cadres de corps de dimensions égales et deux partitions rayonnantes telles que présentées précédemment dont l'épaisseur de chacune est égale à la moitié de l'épaisseur d'un cadre de corps. Ainsi, dans une ruche adaptée pour recevoir un nombre donné de cadres de corps, seul un cadre de corps doit être retiré pour être remplacé par deux partitions rayonnantes alors que les solutions de l'art antérieur nécessitaient d'utiliser deux cadres de corps calfeutrés en lieu et place de deux cadres de corps standards.

Dans une forme de réalisation, la ruche comprenant au moins une partition rayonnante chauffante telle que décrite précédemment.

De préférence, l'au moins un élément de chauffage de ladite au moins une partition rayonnante chauffante est alimenté électriquement, par exemple via un câble électrique, par une source d'alimentation électrique (interne ou externe à la ruche).

Avantageusement, chaque partition rayonnante chauffante comprend quatre résistances s'étendant longitudinalement montées sur l'une des faces de ladite partition rayonnante chauffante. Deux résistances sont disposées chacune en s'étendant respectivement le long du bord latéral gauche et du bord latéral droit du panneau. Une résistance est disposée en s'étendant le long du bord inférieur du panneau et une résistance est disposée dans la partie supérieure du panneau en s'étendant transversalement parallèlement au bord supérieur du panneau, sous les trois rainures. Les résistances sont montées sur les faces qui sont tournées vers le centre de la ruche afin de chauffer les cadre de corps qui placés entre les deux partitions rayonnantes chauffantes.

Avantageusement, la ruche comprend un connecteur configuré pour recevoir un courant d'une source d'alimentation électrique externe et qui est relié électriquement à l'au moins un élément de chauffage.

En variante ou en complément, la ruche comprend une source d'alimentation électrique interne, par exemple une batterie rechargeable, afin d'alimenter l'au moins un élément de chauffage de l'au moins une partition rayonnante chauffante.

La ruche peut comprendre en outre un thermostat monté à l'intérieur de la ruche en étant relié électriquement à l'au moins un élément de chauffage de l'au moins une partition rayonnante chauffante et configuré pour, lorsque ledit thermostat est alimenté électriquement par une source d'alimentation électrique (interne ou externe), mesurer la température ambiante à l'intérieur de la ruche et pour autoriser le passage du courant tant que la température mesurée est inférieure à une température plafond prédéterminée.

L'invention concerne également une partition chauffante pour ruche d'abeilles, ladite ruche comprenant un plancher, une paroi avant, deux parois latérales, une paroi arrière, un couvercle de toit amovible, ladite partition chauffante comprenant un panneau rigide monobloc, de préférence de forme sensiblement rectangulaire, réalisé en au moins un matériau isolant, la partition chauffante étant configurée pour être insérée entre la paroi avant et la paroi arrière de la ruche d'abeilles afin d'isoler l'intérieur de la ruche et comprenant au moins un élément de chauffage.

L'au moins un élément de chauffage peut être intégré dans le panneau, notamment dans un logement, de la partition chauffante ou monté sur une face ou un bord de la partition chauffante.

De préférence, l'au moins un élément de chauffage est alimenté électriquement, par exemple via un câble électrique, par une source d'alimentation électrique (interne ou externe à la ruche).

Dans une forme de réalisation, la partition peut comprendre au moins une borne ou une broche métallique saillante de type « mâle » permettant de connecter l'au moins un élément de chauffage à une source d'alimentation électrique. L'utilisation d'une ou plusieurs bornes ou broches de type « mâle » permettant d'éviter la présence d'un orifice de branchement que les abeilles pourraient boucher, par exemple avec un mélange de propolis et/ou de cire.

En variante ou en complément, la partition peut comprendre un ou plusieurs fils électriques s'étendant depuis un bord du panneau pour relier l'au moins un élément électrique à une source d'alimentation électrique. Dans ce cas, lorsque la partition est montée dans la ruche, il suffit de disposer l'extrémité libre du ou des câbles à l'extérieur de la ruche et de replacer le couvercle puis de brancher le ou les fils, par exemple via un ou plusieurs connecteurs à la source d'alimentation électrique.

Avantageusement, l'épaisseur de l'au moins un élément de chauffage est inférieure à 3 mm, de préférence de l'ordre de 1 mm.

Avantageusement, l'au moins un élément de chauffage est de type résistance, qui est un moyen simple et efficace pour générer du chauffage.

Dans une forme de réalisation particulière, l'au moins un élément de chauffage est une résistance de faible épaisseur, moins de 3 mm, logée dans un logement prévu à cet effet, formé sur une face du panneau de la partition en étant collée sur la couche de matériau rayonnant qui recouvre la face du panneau. De la sorte, la chaleur générée par l'élément de chauffage est transmise par conduction à travers la couche de matériau rayonnant et le bois sert d'isolant pour renvoyer la chaleur.

Avantageusement encore, la partition chauffante comprend quatre résistances s'étendant longitudinalement montées sur l'une des faces de ladite partition chauffante, dont deux sont disposées chacune en s'étendant le long d'un bord latéral du panneau, une est disposée en s'étendant le long du bord inférieur du panneau et une est disposée dans la partie supérieure du panneau en s'étendant transversalement.

Dans une forme de réalisation, la partition comprend au moins une sonde de température apte à être reliée à un module de contrôle.

Dans une forme de réalisation, au moins l'une des deux faces du panneau de l'au moins une partition chauffante est recouverte au moins en partie d'au moins une couche d'un matériau rayonnant.

Selon une caractéristique de l'invention, la couche de matériau rayonnant présente une émissivité thermique inférieure à 0,2, de préférence inférieure à 0,1 afin d'augmenter le pouvoir d'isolation du panneau et donc de la ruche.

De préférence, la couche de matériau rayonnant comprend ou est constituée d'aluminium non oxydé ou poli, l'aluminium non oxydé ou poli présentant de bonnes caractéristiques de rayonnement (émissivité thermique de l'ordre de 0,09 pour l'aluminium non oxydé et de l'ordre de 0,05 pour l'aluminium poli), ou de tout autre matériau adapté, de préférence dont l'émissivité thermique est inférieure ou égale à 0,10, tel que par exemple le zinc poli (0,03) ou oxydé (0,10), le cuivre poli (0,03) ou le laiton poli (0,03 à 0,05), ou inférieure ou égale à 0,20 tel que par exemple l'inox (0,20), l'acier poli (0,20) ou le fer non oxydé (0,20).

Dans une forme de réalisation, la couche de matériau rayonnant recouvre intégralement l'au moins une face du panneau.

Dans une autre forme de réalisation, la couche de matériau rayonnant recouvre l'au moins une face du panneau sur au moins 50 %, voire au moins 70 %, de préférence au moins 80 % de sa surface.

La couche de matériau rayonnant peut être fixée sur la face du panneau, par exemple par collage, agrafage, clouage, pressage ou tout autre moyen de fixation adapté. En variante, la couche de matériau rayonnant peut être une peinture apposée sur la face ou les faces du panneau.

Dans une forme de réalisation, une seule face de la partition chauffante comporte une couche de matériau rayonnant, c'est-à-dire qu'une seule face du panneau isolant est recouverte d'au moins une couche d'un matériau rayonnant.

Dans une autre forme de réalisation, les deux faces de la partition chauffante comportent chacune une couche de matériau rayonnant, d'un matériau identique ou différent.

De préférence, le panneau de la partition chauffante est réalisé en bois massif, tel que du balsa ou tout autre bois massif à haute capacité d'isolation.

Dans une autre forme de réalisation, le panneau est réalisé en contreplaqué, par exemple de type CTB-X, CTB-H ou tout autre type de contreplaqué adapté. Notamment, l'âme du panneau peut être réalisée en un matériau de type polyuréthane ou polystyrène, en particulier de polystyrène extrudé (par exemple de type Styrodur^{®}), disposé entre deux couches de placage en bois, par exemple collées.

Dans une autre forme de réalisation, le panneau est un panneau de grandes particules orientées OSB (Oriented Strand Board).

Dans une autre forme de réalisation, le panneau est réalisé en bois latté.

Ces différents matériaux sont rigides et solides et permettent d'isoler efficacement la ruche.

De manière avantageuse, la partition chauffante présente un caractère imputrescible, notamment en étant recouverte d'une huile de protection, par exemple d'huile de lin.

De préférence, la partition chauffante comprend au moins un organe d'insertion apte à recevoir un outil d'extraction permettant d'extraire ladite partition chauffante du corps de ruche. L'outil d'extraction est par exemple une pince lève-cadre. Ainsi, l'outil d'extraction coopère avec l'organe d'insertion de sorte que l'apiculteur peut rapidement et aisément extraire la partition chauffante de la ruche sans toutefois endommager la partition chauffante.

De préférence encore, l'organe d'insertion se présente sous la forme d'une rainure formée au niveau de la partie supérieure d'au moins une des deux faces de la partition chauffante.

De préférence, la partition chauffante étant délimitée par un bord supérieur, un bord inférieur, deux bords latéraux en présentant deux faces, chacune des faces reliant le bord supérieur, le bord inférieur et les bords latéraux, la rainure est formée à moins de deux centimètres du bord supérieur ou des bords latéraux de la partition chauffante. La rainure peut être horizontale ou verticale. De cette façon, un apiculteur peut facilement et rapidement extraire la partition chauffante par effet de levier en insérant un lève-cadre dans la rainure.

Dans une autre forme de réalisation, l'organe d'insertion est une anse ou un crochet dans lequel un outil d'extraction peut s'insérer.

De préférence, la partition chauffante est pleine. Autrement dit, la partition chauffante est remplie de matière sur 100% de sa surface.

Dans une autre forme de réalisation, la partition chauffante est pleine sur au moins 80 % de sa surface, de préférence plus de 90 % de sorte à délimiter au moins une ouverture traversante.

Plus la partition chauffante est pleine sur une surface importante, plus l'isolation thermique de la ruche est améliorée.

De préférence, la partition chauffante délimite au moins une ouverture traversante et comprend une grille, montée dans ladite ouverture traversante et adaptée pour empêcher la reine de la ruche de traverser l'ouverture tout en autorisant les abeilles ouvrières à la traverser. Autrement dit, les ouvertures de la grille sont dimensionnées de sorte à permettre le passage des abeilles ouvrières tout en empêchant la reine de la ruche de traverser la grille.

Avantageusement, l'au moins ouverture traversante est disposée à proximité du bord inférieur, c'est à dire au niveau de la partie inférieure de la partition chauffante. En effet, dans une ruche, la chaleur monte dans la partie supérieure du corps de la ruche. Ainsi, les abeilles se déplacent plutôt vers la partie supérieure du corps afin de profiter de la chaleur et moins vers la partie inférieure du corps de la ruche, plus froid. Il est donc plus adapté de positionner une ouverture traversante dans la partie inférieure de chaque partition chauffante. De cette façon, moins d'abeilles se trouveront devant l'ouverture traversante et les abeilles souhaitant circuler de part et d'autres de la grille pourront le faire plus aisément que si l'ouverture traversante était formée dans la partie supérieure de la partition, plus encombrée.

Dans une forme de réalisation, l'épaisseur de la partition chauffante est comprise entre 24 et 25 mm, ce qui correspond à l'épaisseur standard d'un cadre de corps d'une ruche Dadant, afin de pouvoir positionner la partition chauffante à l'emplacement d'un cadre de corps dans une telle ruche.

Dans une autre forme de réalisation, l'épaisseur de la partition chauffante est comprise entre 10 et 12 mm, ce qui est de l'ordre de la moitié de la valeur de l'épaisseur d'un cadre d'une ruche Dadant. Ainsi, deux partitions chauffantes occuperont l'espace d'un seul cadre de corps d'une ruche Dadant, ce qui permet de ne supprimer qu'un cadre de corps lorsque deux partitions chauffantes sont placées dans la ruche. Autrement dit, il n'est pas nécessaire de retirer deux cadres de corps mais un seul cadre de corps pour placer deux partitions chauffantes dans la ruche en occupant la même épaisseur.

L'invention concerne également une ruche pour abeilles comprenant un plancher, une paroi avant, deux parois latérales, une paroi arrière, un couvercle de toit amovible, au moins un cadre de corps, chaque cadre de corps se présentant sous la forme d'un châssis amovible de la ruche, ledit châssis comportant quatre bordures minces reliées par des fils métalliques entre lesquels est insérée une feuille de cire gaufrée permettant la production de miel par les abeilles, ladite ruche étant remarquable en ce qu'elle comprend en outre au moins une partition chauffante telle que présentée précédemment.

L'invention concerne également une ruche pour abeilles comprenant un plancher, une paroi avant, deux parois latérales, une paroi arrière, un couvercle de toit amovible, au moins un cadre de corps, chaque cadre de corps se présentant sous la forme d'un châssis amovible de la ruche, ledit châssis comportant quatre bordures minces reliées par des fils métalliques entre lesquels est insérée une feuille de cire gaufrée permettant la production de miel par les abeilles, ladite ruche étant remarquable en ce qu'elle comprend en outre au moins un élément de chauffage monté sur au moins l'une des parois de la ruche ou sous le couvercle de la ruche ou sur le plancher de la ruche ou sur au moins l'un des cadre de corps de la ruche.

L'au moins un élément de chauffage peut être intégré dans un élément de la ruche, notamment dans un logement, ou monté sur une surface ou un bord d'un élément de la ruche (paroi, cadre, partition, etc.).

De préférence, l'au moins un élément de chauffage est alimenté électriquement, par exemple via un câble électrique, par une source d'alimentation électrique (interne ou externe à la ruche).

Dans une forme de réalisation, la ruche peut comprendre au moins une borne ou une broche métallique saillante de type « mâle » permettant de connecter l'au moins un élément de chauffage à une source d'alimentation électrique. L'utilisation d'une ou plusieurs bornes ou broches de type « mâle » permettant d'éviter la présence d'un orifice de branchement que les abeilles pourraient boucher, par exemple avec un mélange de propolis et/ou de cire.

En variante ou en complément, la ruche peut comprendre un ou plusieurs fils électriques s'étendant depuis l'au moins un élément électrique et permettant de le relier à une source d'alimentation électrique. Dans ce cas, il suffit de disposer l'extrémité libre du ou des câbles à l'extérieur de la ruche et de replacer le couvercle puis de brancher le ou les fils, par exemple via un ou plusieurs connecteurs à la source d'alimentation électrique.

Avantageusement, l'épaisseur de l'au moins un élément de chauffage est inférieure à 3 mm, de préférence de l'ordre de 1 mm.

Avantageusement, l'au moins un élément de chauffage est de type résistance, qui est un moyen simple et efficace pour générer du chauffage.

Dans une forme de réalisation particulière, l'au moins un élément de chauffage est une résistance de faible épaisseur, moins de 3 mm, logée dans un logement prévu à cet effet, formé dans un élément de la ruche, par exemple en étant collée.

Avantageusement encore, la ruche comprend une pluralité de résistances montées à divers endroits de la ruche, de préférence à l'intérieur, par exemple sur ou dans les cadres, les partitions, le plancher, le couvercle.

Dans une forme de réalisation, la ruche comprend au moins une sonde de température apte à être reliée à un module de contrôle.

L'invention concerne également un module de contrôle d'une ruche comportant au moins une partition chauffante, ledit module de contrôle étant apte à être placé à l'intérieur ou à l'extérieur de ladite ruche et qui est configuré pour :
- être alimenté électriquement par une source d'alimentation interne ou externe,
- recevoir des mesures de température d'au moins une sonde de température placée à l'intérieur de la ruche,
- réguler électroniquement la température à l'intérieur de la ruche entre une température plancher et une température plafond (fonction de thermostat) à partir des mesures de température reçues.

A cette fin, le module de contrôle peut être couplé une ou plusieurs sondes de température placées l'intérieur de la ruche et être configuré pour recevoir les mesures de température de l'au moins une sonde.

Avantageusement, le module de contrôle est configuré pour réaliser la régulation de température par microcoupures et/ou en commandant le fonctionnement de seulement une partie des éléments de chauffage de la ou des partitions de la ruche. Cela permet de gérer l'inertie de chauffage pour éviter d'atteindre la température plafond même si la température continue à augmenter après l'arrêt du chauffage ou la réduction de la puissance de chauffage.

Avantageusement, la température plancher peut être choisie de sorte à tuer le « varroa destructor », qui est une espèce d'acariens parasites de l'abeille adulte, des larves et des nymphes. Dans ce but, la température plancher doit être de préférence supérieure ou égale à 42°C.

Avantageusement, la température plafond est choisie de sorte à éviter de tuer les larves d'abeilles, par exemple en étant inférieure à 44°C.

Le module de contrôle peut être monté dans ou sur la ruche ou bien être placé à l'extérieur de la ruche.

Avantageusement, le module de contrôle est configuré pour contrôler plusieurs partitions et/ou plusieurs ruches simultanément.

Le module de contrôle comprend avantageusement un boitier.

L'invention concerne également une ruche comprenant au moins une partition chauffante telle que décrite ci-avant, de préférence rayonnante, au moins une sonde de température et un module de contrôle telle que décrit ci-avant, monté dans ou sur la ruche et relié à ladite au moins une sonde de température, par exemple par un câble ou un moyen de communication sans fil.

L'invention concerne également un système de ruche comportant une ruche comprenant au moins une partition chauffante telle que décrite ci-avant, de préférence rayonnante, au moins une sonde de température et un module de contrôle telle que décrit ci-avant, placé à l'extérieur de la ruche et relié à ladite au moins une sonde de température, par exemple par un câble ou un moyen de communication sans fil.

L'invention concerne également une partition isolante pour ruche d'abeilles, ladite ruche comprenant un plancher, une paroi avant, deux parois latérales, une paroi arrière, un couvercle de toit amovible, ladite partition isolante comprenant un panneau rigide monobloc, de préférence de forme sensiblement rectangulaire, réalisé en au moins un matériau isolant, par exemple en bois massif, en contreplaqué, en grandes particules orientées ou en bois latté, la partition isolante étant configurée pour être insérée entre la paroi avant et la paroi arrière de la ruche d'abeilles afin d'isoler l'intérieur de la ruche.

Dans une forme de réalisation de cette partition isolante, le panneau délimite au moins une ouverture traversante dans laquelle est montée une grille adaptée pour empêcher la reine de la ruche de traverser l'ouverture tout en autorisant les abeilles ouvrières à la traverser.

Dans une forme de réalisation de cette partition isolante, la partition isolante comprend au moins un organe d'insertion apte à recevoir un outil d'extraction de la partition isolante.

De préférence, chaque organe d'insertion est placé à proximité du bord supérieur de ladite partition isolante. De cette façon, lorsqu'une partition isolante est montée dans une ruche, l'apiculteur qui souhaite retirer la partition isolante à l'aide d'un outil d'extraction peut facilement accéder à l'organe d'insertion pour insérer l'outil d'extraction et retirer la partition isolante de la ruche.

Dans une forme de réalisation, l'organe d'insertion est placé sur au moins une face de la partition isolante.

De préférence, l'organe d'insertion est une évidemment, se présentant par exemple sous la forme d'une rainure formée au niveau de la partie supérieure d'au moins une des faces de la partition isolante, par exemple à moins de 2 centimètres du bord supérieur. La rainure peut s'étendre horizontalement sur la face de la partition isolante en position d'utilisation. La rainure est formée de sorte qu'un outil d'extraction, tel qu'un lève-cadre, puisse être inséré aisément dans ladite rainure afin d'extraire la partition isolante de la ruche, notamment par effet de levier sur un cadre adjacent. De préférence, plusieurs rainures sont formées dans chaque face de la partition isolante.

### Description des dessins

D'autres caractéristiques et avantages de l'invention apparaîtront encore à la lecture de la description qui va suivre. Celle-ci est purement illustrative et doit être lue en regard des dessins annexés sur lesquels :
[Fig.1] La [Fig.1] est une vue en perspective d'une forme de réalisation d'une ruche ;
[Fig.2] La [Fig.2] représente une forme de réalisation d'un cadre de corps pour ruche ;
[Fig.3] La [Fig.3] représente une vue partielle en perspective de la ruche de la [Fig.1] montrant le plancher, les parois avant, arrière et latérale gauche du corps de ruche, dans lequel est monté un ensemble de cadres de corps ;
[Fig.4] La [Fig.4] représente une première forme de réalisation d'une partition rayonnante selon l'invention, comprenant une pluralité d'organes d'insertion ;
[Fig.5] La [Fig.5] illustre une vue en perspective de la partition rayonnante de la [Fig.4] ;
[Fig.6] La [Fig.6] illustre une deuxième forme de réalisation d'une partition rayonnante comprenant une pluralité d'ouvertures traversantes selon l'invention ;
[Fig.7] La [Fig.7] illustre la partition rayonnante de la [Fig.6], une grille étant en outre montée dans chaque ouverture traversante ;
[Fig.8] La [Fig.8] illustre une troisième forme de réalisation d'une partition rayonnante selon l'invention, comprenant une pluralité d'organes d'insertion et une pluralité d'ouvertures traversantes comportant chacune une grille ;
[Fig.9] La [Fig.9] illustre une vue en perspective du plancher et d'un corps de ruche, compotant un ensemble de cadres de corps et de deux partitions rayonnantes selon l'invention.
[Fig.10] La [Fig.10] illustre en perspective et en vue éclatée une autre forme de réalisation d'une ruche selon l'invention.
[Fig.11] La [Fig.11] illustre une autre vue en perspective de la forme de réalisation de la [Fig.10].
[Fig.12] La [Fig.12] illustre une partition rayonnante dite « partition rayonnante chauffante » de la ruche des figures 10 et 11.

### Description des modes de réalisation

L'invention concerne notamment une partition rayonnante pour ruche, ainsi qu'une ruche comportant une telle partition rayonnante. La ruche selon l'invention est une ruche moderne, notamment de type ruche verticale modulaire ou ruche horizontale à barres. En particulier, la ruche selon l'invention peut être une ruche Dadant, une ruche Langstroth, une ruche De Layens, une ruche Voirnot, une ruche Warré ou une ruche Zander ou tout ruche adaptée dans laquelle peut être montée la partition rayonnante selon l'invention.

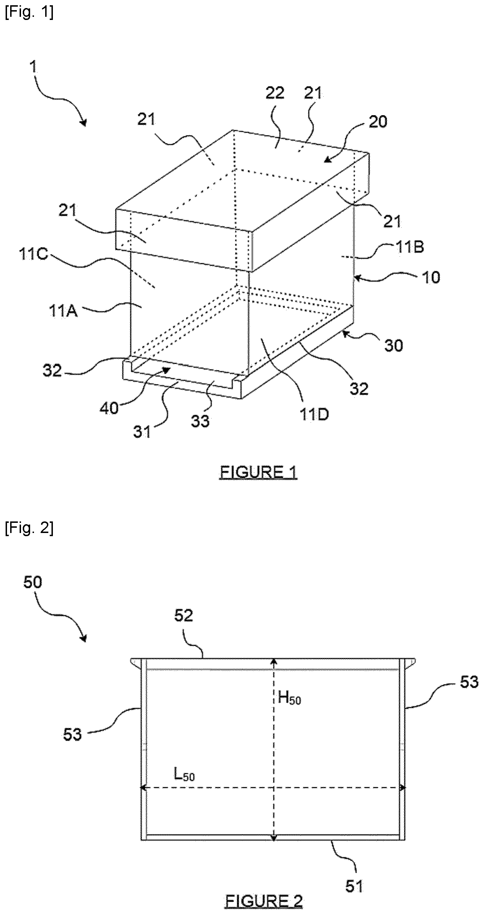

Dans le présent document, les termes « supérieur(e) », « inférieur(e) », « avant », « arrière », « droite » et « gauche » sont définis par rapport à une vue avant de la ruche au sens de la [Fig.1], ladite face avant comportant une ouverture de passage des abeilles vers l'intérieur ou l'extérieur de la ruche. Cette définition, utilisée ici à des fins explicatives, ne saurait limiter la portée de la présente invention dans la mesure où l'ouverture de passage des abeilles pourrait se situer ailleurs, par exemple sur une face latérale de la ruche.

On a représenté sur la [Fig.1] un exemple non limitatif de ruche 1 selon l'invention.

### Ruche 1

Dans cet exemple, la ruche 1 est de type ruche Dadant et comprend, de manière simplifiée et à des fins de clarté, un corps 10 (communément appelé corps de ruche), un couvercle de toit 20 amovible, un plancher 30, une ouverture de passage 40 des abeilles, une pluralité de cadres de corps 50 et au moins une partition rayonnante 60, de manière non limitative.

### Corps 10

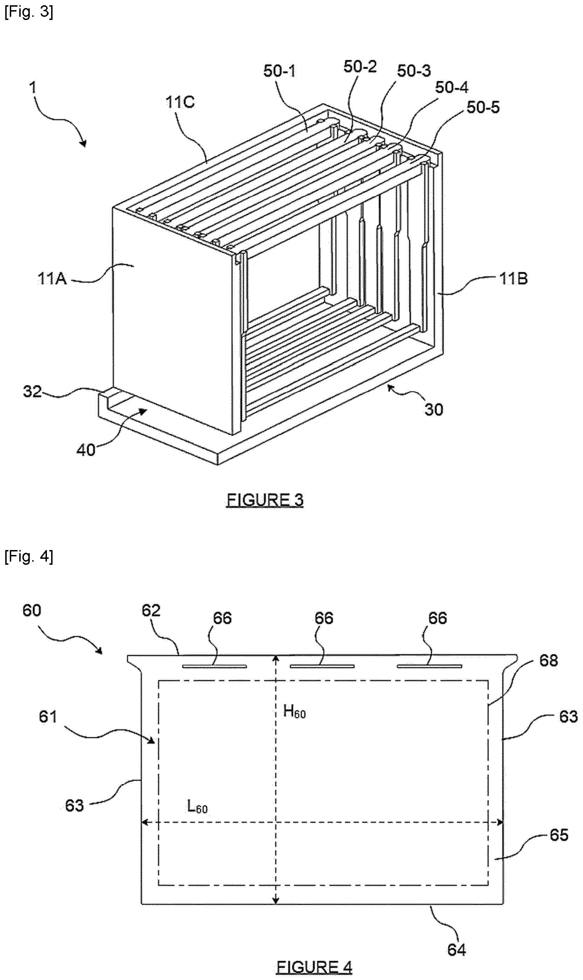

Le corps 10 de ruche est de forme parallélépipédique et comprend quatre parois s'étendant verticalement : une paroi avant 11A, une paroi arrière 11B ([Fig.3]), opposée à la paroi avant 11A, une paroi latérale gauche 11C et une paroi latérale droite 11D. Les parois latérales 11C et 11D permettent chacune de relier la paroi avant 11A à la paroi arrière 11B. La paroi avant 11A comprend un bord inférieur. Le corps 10 est apte à recevoir des cadres de corps 50 amovibles, dont un exemple est illustré sur la [Fig.2], sur lesquels les abeilles vont bâtir leurs rayons, et une ou plusieurs partitions rayonnantes 60 amovibles. Les cadres de corps 50 et les partitions rayonnantes 60 sont disposés verticalement entre la paroi latérale gauche 11C et la paroi latérale droite 11D. Par ailleurs, la paroi avant 11A et la paroi arrière 11B comprennent chacune une face intérieure, orientée vers l'intérieur de la ruche 1.

En référence à la [Fig.3], la ruche 1 comprend, sur la face intérieure de la paroi avant 11A et de la paroi arrière 11B, des évidements permettant de recevoir les bords latéraux des cadres de corps 50 et des partitions rayonnantes 50 afin de les bloquer dans le corps de ruche 10.

### Couvercle de toit 20

De nouveau en référence à la [Fig.1], le couvercle de toit 20 est également de forme parallélépipédique et comporte quatre parois 21 sensiblement verticales et une plaque supérieure 22 reliant lesdites parois 21 de sorte à coiffer les parois 11A, 11B, 11C et 11D du corps 10 de ruche, comme illustré sur la [Fig.1].

### Plancher 30

Le plancher 30 présente la forme d'un plateau et comprend une plaque de fond 31 de forme rectangulaire sur laquelle sont fixés deux bords latéraux 32 s'étendant de part et d'autre sur toute la longueur de la plaque de fond 31. La longueur du plancher 30 est supérieure à la longueur des parois latérales 11C, 11D du corps 10 de ruche 1 de manière à former une surface dite « d'envol » 33 permettant le décollage et l'atterrissage des abeilles.

Les parois 11A, 11B, 11C et 11D du corps 10 reposent sur les bords latéraux 32 du plancher 30 de sorte à former l'ouverture de passage 40 qui s'étend entre la plaque de fond 31 et les bords latéraux 32 du plancher 30 d'une part et le bord inférieur de la paroi avant 11A du corps 10 d'autre part. L'ouverture de passage 40 permet le passage des abeilles vers l'intérieur ou l'extérieur de la ruche 1.

En variante, l'une au moins des parois 11A, 11B, 11C, 11D du corps 10 pourrait comporter l'ouverture de passage 40 et une surface d'envol 33 s'étendant perpendiculairement depuis ladite paroi 11A, 11B, 11C, 11D sous ladite ouverture de passage 40. En outre, on notera que, dans une autre forme de réalisation, la ruche 1 selon l'invention pourrait comprendre plus d'une ouverture de passage 40 des abeilles.

### Cadre de corps 50

En référence à la [Fig.2], il est représenté une forme de réalisation d'un cadre de corps 50. Chaque cadre de corps 50 est destiné à être placé verticalement dans la ruche 1 et comprend quatre bordures minces, par exemple en bois, dont une bordure inférieure 51, une bordure supérieure 52, parallèle à la bordure inférieure 51, et deux bordures latérales 53, parallèles entre elles et reliant la bordure inférieure 51 et la bordure supérieure 52.

L'épaisseur de chaque bordure 51, 52, 53 désigne la dimension des bordures selon un axe normal au plan dans lequel s'étend chaque cadre de corps 50. La longueur L₅₀ d'un cadre de corps 50 désigne la distance séparant les bordures latérales 53. La hauteur H₅₀ d'un cadre de corps 50 désigne la distance séparant la bordure inférieure 51 et la bordure supérieure 52.

Les quatre bordures 51, 52, 53 sont reliées par des fils métalliques entre lesquels est insérée une feuille de cire gaufrée (non visibles), afin que les abeilles y construisent des alvéoles pour ensuite produire du miel dans les alvéoles. Par ailleurs, la reine des abeilles peut également pondre dans certaines alvéoles des œufs d'abeilles, afin de faire naître de nouvelles abeilles. Ainsi, les cadres de corps 50 peuvent également avoir une fonction de reproduction en plus d'une fonction de production de miel. De plus encore, les cadres de corps 50 peuvent également avoir une fonction de stockage de pollen, afin de nourrir les larves d'abeille.

En référence à la [Fig.3], il est représenté une vue en trois dimensions du plancher 30, de la paroi avant 11A, de la paroi arrière 11B et de la paroi latérale gauche 11C du corps 10 de la ruche 1 ainsi que d'un ensemble de cinq cadres de corps 50-1, 50-2, 50-3, 50-4, 50-5 montés dans la ruche 1. Les cadres de corps 50-1, 50-2, 50-3, 50-4, 50-5 sont disposés verticalement et parallèlement entre eux et à la paroi latérale gauche 11C et la paroi latérale droite 11D (non représentée sur la [Fig.3]) à l'intérieur de la ruche 1.

La longueur de la bordure supérieure 52 est supérieure à la longueur L₅₀, de sorte qu'une portion de la bordure supérieure 52 soit en saillie par rapport à chaque bordure latérale 53 pour bloquer le cadre de corps dans les évidements des faces intérieurs des parois avant 11A et arrière 10B du corps 10 de ruche.

### Partition rayonnante 60

Chaque partition rayonnante 60 sert à isoler la ruche 1 du froid en permettant une réduction des échanges thermiques et une meilleure conservation de la chaleur à l'intérieur de la ruche 1.

On a représenté sur les figures 4 à 8, différentes formes de réalisation de la partition rayonnante 60 selon l'invention.

La partition rayonnante 60 présente une forme sensiblement rectangulaire et est configurée pour être insérée entre la paroi avant 11A et la paroi arrière 11B d'un corps 10 de ruche 1 d'abeilles afin d'isoler l'intérieur de ladite ruche 1. Quand la ruche 1 comporte plusieurs partitions rayonnantes 60, ces partitions rayonnantes 60 sont de préférence identiques.

La partition rayonnante 60 comprend un panneau 61 rigide monobloc réalisé dans au moins un matériau isolant et dont au moins l'une des deux faces est recouverte au moins en partie d'au moins une couche réalisée en un matériau dit « rayonnant », c'est-à-dire apte à réfléchir et faire rayonner une partie importante, au moins 50 %, de l'énergie thermique, afin d'augmenter l'efficacité de l'isolation thermique en conservant plus efficacement la chaleur à l'intérieur de la ruche 1.

La partition rayonnante 60 est délimitée par un bord supérieur 62 s'étendant horizontalement, un bord inférieur 64, s'étendant également horizontalement en étant parallèle au bord supérieur 62, deux bords latéraux 63 parallèles entre eux et reliant le bord supérieur 62 au bord inférieur 64, et présente ainsi deux faces 65 opposées.

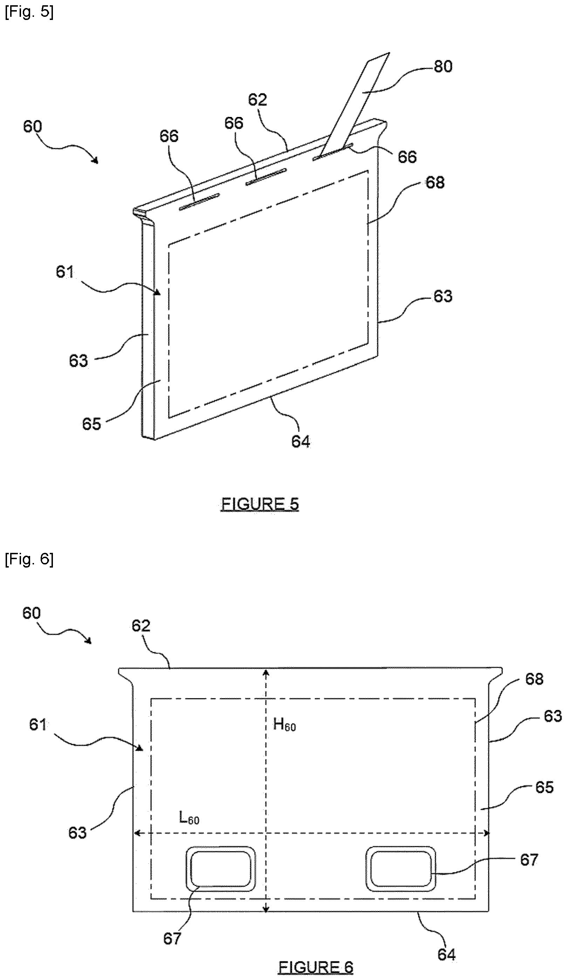

La partition rayonnante 60 a sensiblement les mêmes dimensions de longueur et de largeur que celles des cadres de corps 50. Ainsi, comme illustré sur les figures 4 et 6, la longueur L₆₀ de chaque partition rayonnante 60 séparant les bords latéraux 63 est identique à la longueur L₅₀ des cadres de corps 50. La hauteur H₆₀ de chaque partition rayonnante 60 séparant le bord supérieur 62 et le bord inférieur 64 est égale à la hauteur H₅₀ des cadres de corps 50.

De préférence, la partition rayonnante 60 est conformée pour que les abeilles puissent se déplacer de part et d'autre de ladite partition rayonnante 60 en passant sur les côtés ou sous la partition rayonnante 60 mais pour que la reine, qui est de dimensions plus importantes que les abeilles, ne puisse se déplacer sous ou sur les côtés de la partition rayonnante 60.

L'épaisseur de chaque partition rayonnante 60 peut être égale ou inférieure à l'épaisseur des cadres de corps 50. Notamment, l'épaisseur de chaque partition rayonnante 60 peut être égale à la moitié de celle des cadres de corps 50. Dans ce cas, pour une ruche 1 adaptée pour recevoir un nombre donné de cadres de corps 50, il n'est nécessaire d'enlever qu'un seul cadre de corps 50 pour le remplacer par deux partitions rayonnantes 60.

Pour chaque panneau 61, la longueur du bord supérieur 62 est supérieure à la longueur L₆₀ de sorte qu'une portion du bord supérieur 62 soit en saillie par rapport à chaque bord latéral 63 pour maintenir chaque partition rayonnante 60 verticalement de la même manière que les cadres de corps 50. Ainsi, les partitions rayonnantes 60 sont montées dans la ruche 1 à la manière des cadres de corps 50.

Le panneau 61 peut par exemple être réalisé en bois massif, tel que du balsa ou tout autre bois massif à haute capacité d'isolation. En variante, le panneau 61 peut être réalisé en contreplaqué, par exemple de type CTB-X, CTB-H ou tout autre type de contreplaqué adapté. Notamment, l'âme du panneau 61 peut être réalisée en un matériau de type polyuréthane ou polystyrène, en particulier de polystyrène extrudé (par exemple de type Styrodur^{®}), disposé entre deux couches de placage en bois, par exemple collées. En variante, le panneau 61 peut par exemple être un panneau de grandes particules orientées OSB (Oriented Strand Board). En variante, le panneau 61 peut par exemple être réalisé en bois latté.

Dans cet exemple, la couche en matériau thermiquement rayonnant se présente sous la forme d'une feuille 68, fixée sur une face 65 ou sur les deux faces 65 du panneau 61. En variante, la couche pourrait être une couche de peinture. Chaque feuille 68 est de dimensions sensiblement égales à celles des faces 65 du panneau 61, en couvrant de préférence au moins sur 80 % de la surface de chaque face 65 du panneau 61. De préférence, une feuille 68 est fixée sur chaque face 65 du panneau 61. Chaque feuille 68 rayonnante peut par exemple être réalisée en aluminium ou en tout autre matériau adapté, de préférence dont l'émissivité thermique est inférieure ou égale à 0,20, voire à 0,10. Par exemple, l'aluminium non oxydé ou poli présentant de bonnes caractéristiques de rayonnement (émissivité thermique de l'ordre de 0,09 pour l'aluminium non oxydé et de l'ordre de 0,05 pour l'aluminium poli), de même que le zinc poli (0,03) ou oxydé (0,10), le cuivre poli (0,03) ou le laiton poli (0,03 à 0,05), l'inox (0,20), l'acier poli (0,20) ou le fer non oxydé (0,20).

### Organe d'insertion

De préférence, la partition rayonnante 60 comprend au moins un organe d'insertion apte à recevoir un outil d'extraction de la partition rayonnante. Chaque organe d'insertion est notamment placé à proximité du bord supérieur 62 de ladite partition rayonnante 60. De cette façon, lorsqu'une partition rayonnante 60 est montée dans une ruche 1, l'apiculteur qui souhaite retirer la partition rayonnante 60 à l'aide d'un outil d'extraction peut facilement accéder à l'organe d'insertion pour insérer l'outil d'extraction et retirer la partition rayonnante 60 de la ruche.

Dans la première forme de réalisation représentée aux figures 4 et 5, l'organe d'insertion est placé sur au moins une face 65 de la partition rayonnante 60. De préférence, l'organe d'insertion est une évidemment, se présentant dans cet exemple sous la forme d'une rainure 66 formée au niveau de la partie supérieure d'au moins une des faces 65 de la partition rayonnante 60, par exemple à moins de 2 centimètres du bord supérieur 62. La rainure 66 s'étend horizontalement sur la face 65 de la partition rayonnante 60 en position d'utilisation. La rainure 66 est formée de sorte qu'un outil d'extraction, tel qu'un lève-cadre, puisse être inséré aisément dans ladite rainure 66 afin d'extraire la partition rayonnante 60 de la ruche 1, notamment par effet de levier sur un cadre adjacent. De préférence, plusieurs rainures 66 sont formées dans chaque face 65 de la partition rayonnante 60. Ainsi, dans l'exemple illustré, chaque face 65 présente une pluralité de rainures 66 coaxiales.

Selon une autre forme de réalisation, non représentée sur les figures, l'organe d'insertion est placé sur le bord supérieur 62. Dans ce cas, l'organe d'insertion peut se présenter sous la forme d'une anse, d'un crochet, d'une boucle ou similaire, dans lequel ou dans laquelle l'outil d'extraction peut s'insérer.

Ainsi, en référence à la [Fig.5], un lève-cadre 80 coopère avec l'organe d'insertion, autrement dit le lève-cadre 80 est inséré partiellement dans la rainure 66 par l'apiculteur pour extraire la partition rayonnante 60 de la ruche 1 par effet de levier, sans toutefois abîmer la face 65 de la partition rayonnante 60 avec le lève-cadre 80.

### Grille 70

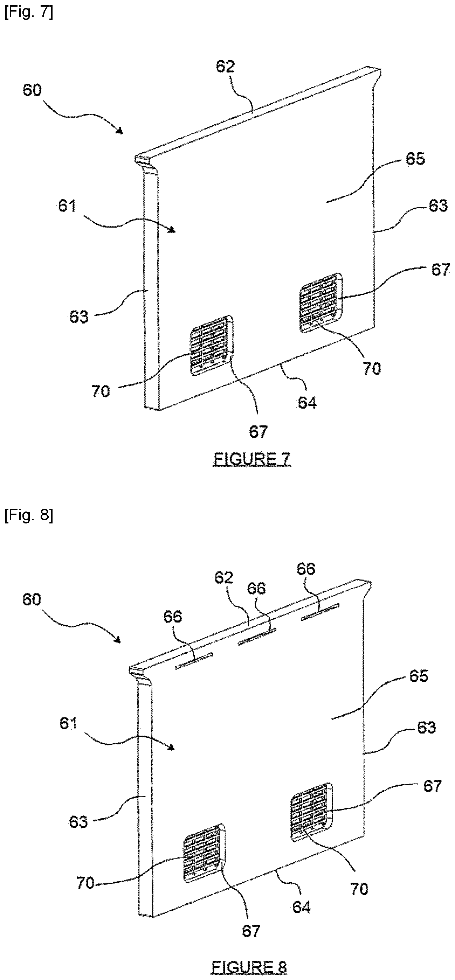

Dans les formes de réalisation illustrées sur les figures 6 à 8, chaque partition rayonnante 60 comprend deux ouvertures traversantes 67 formées à proximité du bord inférieur 64. En variante, la partition rayonnante 60 pourrait comprendre une seule ouverture traversante 67 ou plus de deux ouvertures traversantes 67. La surface totale sur laquelle s'étend l'unique ouverture traversante 67 ou l'ensemble d'ouvertures traversantes 67 est de préférence inférieure à 20 % de la surface de la face 65 de la partition rayonnante 60. Les figures 6 et 7 illustrent une deuxième forme de réalisation de la partition rayonnante 60 selon l'invention. La [Fig.8] illustre une troisième forme de réalisation de la partition rayonnante 60 selon l'invention.

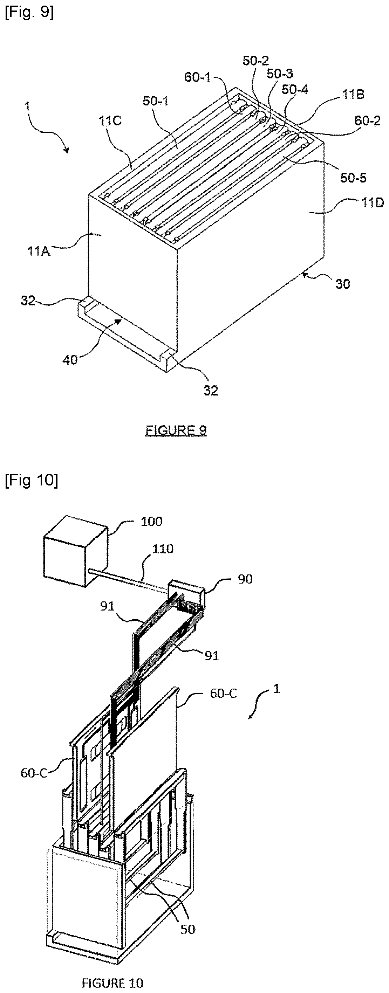

En référence aux figures 7 et 8, la partition rayonnante 60 comprend une grille 70 montée dans chaque ouverture traversante 67 du panneau 61. La grille 70 comprend un ensemble de barreaux verticaux et horizontaux espacées de sorte que les abeilles ouvrières puissent traverser la grille 70 mais que la reine des abeilles, dont la taille est plus importante que les autres abeilles, ne puisse pas traverser la grille 70. De cette façon, seules les abeilles et non la reine, peuvent circuler facilement d'un côté à l'autre de chaque partition rayonnante 60, notamment afin de produire du miel sur toute la surface de la cire gaufrée du premier cadre 50-1 et au dernier cadre 50-5 (figures 3 et 9) et pas seulement sur les bords. Notamment, seules les abeilles et non la reine peuvent accéder au premier cadre 50-1 et au dernier cadre 50-5. Autrement dit, la reine ne peut pas pondre d'œuf d'abeilles dans les alvéoles du premier cadre 50-1 et du dernier cadre 50-5. Le premier cadre 50-1 de production et le dernier cadre 50-5 de production ont ainsi pour fonction seulement la production de miel, sur toute leur surface grâce à la ou aux grilles 70. Les grilles 70 ne sont pas visibles sur la [Fig.6] pour des raisons de clarté, afin de visualiser distinctement les ouvertures traversantes 67.

En référence à la [Fig.8], il est représenté une troisième forme de réalisation de la partition rayonnante 60 dans laquelle le panneau 61 comprend deux ouvertures traversantes 67, dans chacune desquelles est montée une grille 70, et trois rainures 66.

Dans l'exemple présenté en référence à la [Fig.9], la ruche 1 comprend une première partition rayonnante 60-1 et une deuxième partition rayonnante 60-2. La première partition rayonnante 60-1 est placée dans la ruche 1 entre un premier cadre de corps 50-1, adjacent à la paroi latérale gauche 11C. La deuxième partition rayonnante 60-2 est placée entre un quatrième cadre de corps 50-4 et un cinquième cadre de corps 50-5, adjacent à la paroi latérale droite 11D.

Ainsi, les abeilles sont isolées du froid entre la première partition rayonnante 60-1 et la deuxième partition rayonnante 60-2, notamment du fait que le matériau rayonnant permet d'emmagasiner la chaleur dans le centre du corps 10 de la ruche 1, notamment la chaleur produite par les abeilles étant réfléchie par les partitions rayonnantes 60-1, 60-2.

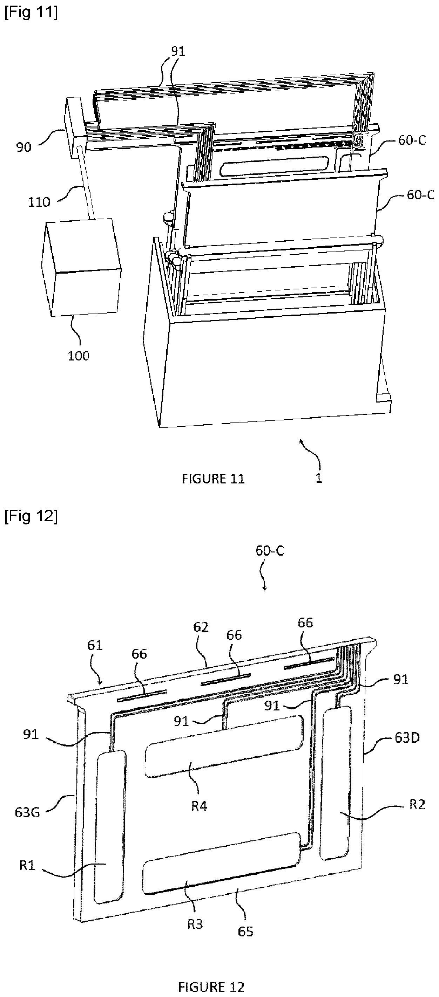

On a représenté aux figures 10 et 11 une forme de réalisation spécifique de la ruche 1 selon l'invention.

Dans cette forme de réalisation, la ruche 1 comprend un module de contrôle 85 et deux partitions rayonnantes chauffantes 60-C.

Les deux partitions rayonnantes chauffantes 60-C sont montées au même endroit que la première partition rayonnante 60-1 et que la deuxième partition rayonnante 60-2 de la forme de réalisation précédente, c'est-à-dire à la deuxième et à l'avant-dernière position dans l'ensemble de cadres de corps 50.

Chaque partition rayonnante chauffante 60-C comprend plusieurs éléments de chauffage. Dans l'exemple des figures 10 à 12, les éléments de chauffage se présentent sous la forme de résistances R1, R2, R3, R4 de chauffage.

En référence à la [Fig.12], chaque partition rayonnante chauffante 60-C comprend dans cet exemple non limitatif quatre résistances R1, R2, R3, R4 s'étendant longitudinalement montées sur l'une des faces de ladite partition rayonnante chauffante 60-C. Deux résistances R1 et R2 sont disposées chacune en s'étendant respectivement le long du bord latéral gauche 63G et du bord latéral droit 63D du panneau 61. Une résistance R3 est disposée en s'étendant le long du bord inférieur 64 du panneau 61 et une R4 est disposée dans la partie supérieure du panneau en s'étendant transversalement parallèlement au bord supérieur 62 du panneau, sous les trois rainures 66.

Les résistances R1, R2, R3, R4 sont montées sur les faces qui sont tournées vers le centre de la ruche 1 afin de chauffer les cadre de corps 50 qui placés entre les deux partitions rayonnantes chauffantes 60-C.

Le module de contrôle 90 peut être interne ou externe à la ruche 1. Notamment, le module de contrôle 90 peut être monté dans ou sur la ruche 1 ou bien être placé à l'extérieur de la ruche 1.

Le module de contrôle 90 est alimenté électriquement par une source d'alimentation 100 interne ou externe.

Le module de contrôle 90 reçoit des mesures de température de sondes de température (non représentées par souci de clarté) placées à l'intérieur de la ruche 1 et pour réguler électroniquement la température à l'intérieur de la ruche 1 entre une température plancher et une température plafond (fonction de thermostat) à partir des mesures de température reçues des sondes.

Le module de contrôle 90 réalise la régulation de température à l'intérieur de la ruche 1 par exemple microcoupures et/ou en commandant le fonctionnement de seulement une partie des résistances R1, R2, R3, R4 de chauffage de la ou des partitions 60- C de la ruche 1.

La température plancher peut être choisie de sorte à ce que les abeilles ne souffrent pas du froid, notamment en hiver. De préférence, la température plancher est supérieure ou égale à 20°C, de préférence 30°C ,de préférence encore 40°C.

Avantageusement, la température plancher peut être choisie de sorte à tuer le « varroa destructor », qui est une espèce d'acariens parasites de l'abeille adulte, des larves et des nymphes. Dans ce but, la température plancher doit être de préférence supérieure ou égale à 42°C.

La température plafond est choisie de sorte à éviter une surchauffe de la ruche 1 qui pourrait tuer les larves des abeilles, par exemple au-delà d'une température ambiante de 44°C. A cette fin, la température plafond peut être choisie de sorte que la température ambiante interne de la ruche 1 n'atteigne pas la température de surchauffe, c'est-à-dire que la température plafond doit être inférieure à la température de surchauffe et choisie de sorte que l'inertie de chauffage des résistances R1, R2, R3, R4 (c'est-à-dire la chaleur qu'elles continuent à produire lorsqu'on coupe leur alimentation en électricité) ne permette pas d'atteindre la température de surchauffe. Par exemple, la température plafond peut être de 43° afin de s'assurer que la température interne n'atteint pas 44°C par inertie.

Le traitement du varroa peut être réalisé par exemple pendant 2 à 3 heures pour s'assurer de le détruire.

De préférence, la température plancher et la température plafond peuvent être paramétrées par un utilisateur. Par exemple, ce paramétrage peut être réalisé directement dans le module de contrôle 90 ou à distance, par exemple via une application et un lien de communication sans fil, par exemple Wifi, Bluetooth^{®}, 2G/3G/4G/5G, afin de transmettre les données de paramétrage au module de contrôle 90 afin qu'il les ajuste.

Le courant est fourni par une source d'alimentation électrique 100 apte à générer un courant électrique et fournir une tension au module de contrôle 90. Cette source d'alimentation électrique 100 peut être une batterie embarquée dans la ruche 1, par exemple à l'intérieur de la ruche 1 ou montée sur l'une des parois de la ruche 1, ou bien être externe à la ruche 1, en se présentant par exemple sous la forme d'un groupe électrogène de type générateur Diesel ou générateur électrique externe. Dans ce dernier cas, la source d'alimentation électrique 100 externe peut être reliée au thermostat 90 via un câble 110 et branchée sur un connecteur (non représenté) monté sur l'une des parois de la ruche 1 et relié électriquement au module de contrôle 90.

Les deux partitions rayonnantes chauffantes 60-C sont reliées électriquement au module de contrôle 90 afin de recevoir le courant généré par la source d'alimentation électrique 100 lorsque la température mesurée est inférieure à une température plancher prédéterminée et alimenter ainsi en courant les résistance R1, R2, R3, R4 pour chauffer l'intérieur de la ruche 1. Chaque résistance R1, R2, R3, R4 est reliée au module de contrôle 90 par une paire de câbles internes 91.

Dans cette forme de réalisation, les deux partitions rayonnantes chauffantes 60-C génèrent de la chaleur à l'intérieur de la ruche 1 en étant alimentées électriquement les résistances intégrées sur les faces de partitions rayonnantes chauffantes 60-C afin de chauffer l'intérieure de la ruche 1.

La partition rayonnante 60 selon l'invention permet donc de manière simple, peu onéreuse, fiable et efficace d'isoler la ruche 1 pour protéger les abeilles du froid notamment lorsqu'elle comprend un ou plusieurs éléments de chauffage. On notera que toute variante différente de la forme de réalisation décrite ci-avant mais ayant la même fonction de partition rayonnante à extraction aisée et rapide est envisagée par le présent document. En particulier, la forme, les dimensions et les éléments de la ruche 1, du corps 10 de ruche 1, du couvercle 20, du plancher 30, des cadres de corps 50 et des partitions rayonnantes 60 ne sont aucunement limitatives de la portée de la présente invention.

## Revendications

1. Partition rayonnante (60) pour ruche (1) d'abeilles, ladite ruche (1) comprenant un plancher (30), une paroi avant (11A), deux parois latérales (11C), une paroi arrière (11B) et un couvercle de toit (20) amovible, **caractérisée en ce que** ladite partition rayonnante (60) comprenant un panneau (61) rigide monobloc réalisé en au moins un matériau isolant dont au moins l'une des deux faces (65) est recouverte au moins en partie d'au moins une couche d'un matériau rayonnant (68), la partition rayonnante (60) étant configurée pour être insérée entre la paroi avant (11A) et la paroi arrière (11B) de la ruche (1) d'abeilles afin d'isoler l'intérieur de la ruche (1).

2. Partition rayonnante (60) selon la revendication 1, dans laquelle la couche de matériau rayonnant (68) présente une émissivité thermique inférieure à 0,2.

3. Partition rayonnante (60) selon la revendication précédente, dans laquelle la couche de matériau rayonnant (68) présente une émissivité thermique inférieure à 0,1.

4. Partition rayonnante (60) selon l'une quelconque des revendications précédentes, dans laquelle le panneau (61) est réalisé en bois massif, en contreplaqué, en grandes particules orientées ou en bois latté.

5. Partition rayonnante (60) selon l'une quelconque des revendications précédentes, comprenant au moins un organe d'insertion (66) apte à recevoir un outil d'extraction (80) de la partition rayonnante (60) pour extraire ladite partition rayonnante (60) d'une ruche (1).

6. Partition rayonnante (60) selon la revendication précédente, le panneau (61) étant délimité par un bord supérieur (62), un bord inférieur (64), deux bords latéraux (63) et deux faces (65), chacune des faces reliant le bord supérieur (62), le bord inférieur (64) et les bords latéraux (63), l'organe d'insertion se présente sous la forme d'une rainure (66) formée au niveau de la partie supérieure d'au moins une des deux faces (65) de la partition rayonnante (60).

7. Partition rayonnante (60) selon l'une quelconque des revendications précédentes, dans laquelle la partition rayonnante (60) est pleine.

8. Partition rayonnante (60) selon l'une quelconque des revendications 1 à 6, dans laquelle la partition rayonnante (60) délimite au moins une ouverture traversante (67) dans laquelle est montée une grille (70) adaptée pour empêcher la reine de la ruche (1) de traverser l'ouverture (67) tout en autorisant les abeilles ouvrières à traverser.

9. Partition rayonnante (60) selon la revendication précédente, comprenant un bord inférieur (64) et dans laquelle l'ouverture traversante (67) est disposée à proximité du bord inférieur (64).

10. Partition rayonnante (60) selon l'une quelconque des revendications précédentes, dite « partition rayonnante chauffante » (60-C), comprenant au moins un élément de chauffage intégré.

11. Partition rayonnante chauffante (60-C) selon la revendication précédente, dans laquelle l'au moins un élément de chauffage intégré est de type résistance.

12. Partition rayonnante chauffante (60-C) selon la revendication précédente, comprenant quatre résistances s'étendant longitudinalement montées sur l'une des faces de la partition rayonnante chauffante (60-C), dont deux sont disposées chacune en s'étendant le long d'un bord latéral du panneau (61), une est disposée en s'étendant le long du bord inférieur du panneau (61) et une est disposée dans la partie supérieure du panneau en s'étendant transversalement.

13. Ruche (1) pour abeilles comprenant un plancher (30), une paroi avant (11A), deux parois latérales (11C), une paroi arrière (11B), un couvercle de toit (20) amovible, au moins un cadre (50) de corps, chaque cadre de corps (50) se présentant sous la forme d'un châssis amovible de la ruche (1), **caractérisée en ce que** ledit châssis comportant quatre bordures minces reliées par des fils métalliques entre lesquels est insérée une feuille de cire gaufrée permettant la production de miel par les abeilles, ladite ruche ( comprenant en outre au moins une partition rayonnante (60) selon l'une quelconque des revendications précédentes.

14. Ruche (1) selon la revendication précédente, comprenant au moins une partition rayonnante chauffante (60-C) selon l'une quelconque des revendications 10 à 12.

15. Ruche (1) selon la revendication précédente, comprenant en outre au moins une sonde de mesure de température placée à l'intérieur de la ruche (1) et un module de contrôle (90) monté à l'intérieur ou à l'extérieur de la ruche (1) en étant relié électriquement à l'au moins un élément de chauffage (R1, R2, R3, R4) de la partition rayonnante chauffante (60-C) et configuré pour, lorsque ledit module de contrôle (90) est alimenté électriquement, recevoir les mesures de température de l'au moins une sonde et réguler la température à l'intérieur de la ruche entre une température plancher et une température plafond.

## Patentansprüche

1. Strahlende Trennwand (60) für einen Bienenstock (1), wobei der Bienenstock (1) einen Boden (30), eine Vorderwand (11A), zwei Seitenwände (11C), eine Rückwand (11B) und einen abnehmbaren Dachdeckel (20) umfasst, **dadurch gekennzeichnet, dass** die strahlende Trennwand (60) eine starre einteilige Platte (61) umfasst, die aus mindestens einem Isoliermaterial hergestellt ist, von der mindestens eine der beiden Seiten (65) mindestens teilweise mit mindestens einer Schicht aus einem strahlenden Material (68) bedeckt ist, wobei die strahlende Trennwand (60) ausgelegt ist, um zwischen der Vorderwand (11A) und der Rückwand (11B) des Bienenstocks (1) eingesetzt zu sein, um das Innere des Bienenstocks (1) zu isolieren.

2. Strahlende Trennwand (60) nach Anspruch 1, wobei die Schicht aus strahlendem Material (68) eine thermische Emissivität unter 0,2 aufweist.

3. Strahlende Trennwand (60) nach vorhergehendem Anspruch, wobei die Schicht aus strahlendem Material (68) eine thermische Emissivität unter 0,1 aufweist.

4. Strahlende Trennwand (60) nach einem der vorhergehenden Ansprüche, wobei die Platte (61) aus Massivholz, Sperrholz, Grobspanplatten oder Lattenholz hergestellt ist.

5. Strahlende Trennwand (60) nach einem der vorhergehenden Ansprüche, umfassend mindestens ein Einfügeelement (66), das imstande ist, ein Werkzeug (80) zum Entfernen der strahlenden Trennwand (60) aus einem Bienenstock (1) aufzunehmen.

6. Strahlende Trennwand (60) nach vorhergehendem Anspruch, wobei die Platte (61) durch eine Oberkante (62), eine Unterkante (64), zwei Seitenkanten (63) und zwei Seiten (65) begrenzt ist, wobei jede der Seiten die Oberkante (62), die Unterkante (64) und die Seitenkanten (63) verbindet, das Einfügeelement in Form einer Nut (66) ausgebildet ist, die im oberen Bereich von mindestens einer der beiden Seiten (65) der strahlenden Trennwand (60) ausgebildet ist.

7. Strahlende Trennwand (60) nach einem der vorhergehenden Ansprüche, wobei die strahlende Trennwand (60) massiv ist.

8. Strahlende Trennwand (60) nach einem der Ansprüche 1 bis 6, wobei die strahlende Trennwand (60) mindestens eine Durchgangsöffnung (67) begrenzt, in der ein Gitter (70) angebracht ist, das geeignet ist, die Bienenkönigin (1) daran zu hindern, die Öffnung (67) zu durchqueren, während es den Arbeitsbienen erlaubt, sie zu durchqueren.

9. Strahlende Trennwand (60) nach vorhergehendem Anspruch, umfassend eine Unterkante (64) und wobei die Durchgangsöffnung (67) in der Nähe der Unterkante (64) angeordnet ist.

10. Strahlende Trennwand (60) nach einem der vorhergehenden Ansprüche, bezeichnet als "heizende strahlende Trennwand" (60-C), umfassend mindestens ein integriertes Heizelement.

11. Heizende strahlende Trennwand (60-C) nach vorhergehendem Anspruch, wobei das mindestens eine integrierte Heizelement vom Typ Widerstand ist.

12. Heizende strahlende Trennwand (60-C) nach vorhergehendem Anspruch, umfassend vier sich längs erstreckende Widerstände, die auf einer der Seiten der heizenden strahlenden Trennwand (60-C) angebracht sind, von denen zwei angeordnet sind, indem sie sich jeweils entlang einer Seitenkante der Platte (61) verlaufend erstrecken, eine angeordnet ist, indem sie sich entlang der Unterkante der Platte (61) verlaufend erstreckt und eine im oberen Teil der Platte angeordnet ist, indem sie sich quer verlaufend erstreckt.

13. Bienenstock (1), umfassend einen Boden (30), eine Vorderwand (11A), zwei Seitenwände (11C), eine Rückwand (11B), einen abnehmbaren Dachdeckel (20), mindestens einem Körperrahmen (50), wobei jeder Körperrahmen (50) die Form eines vom Bienenstock (1) lösbaren Gestells aufweist, **dadurch gekennzeichnet, dass** das Gestell vier dünne Ränder aufweist, die durch Metalldrähte verbunden sind, zwischen denen eine geprägte Wachsfolie eingefügt ist, die es den Bienen ermöglicht, Honig zu produzieren, wobei der Bienenstock (1) ferner mindestens eine strahlende Trennwand (60) nach einem der vorhergehenden Ansprüche umfasst.

14. Bienenstock (1) nach vorhergehendem Anspruch, umfassend mindestens eine heizende strahlende Trennwand (60-C) nach einem der Ansprüche 10 bis 12.

15. Bienenstock (1) nach vorhergehendem Anspruch, umfassend ferner mindestens eine im Inneren des Bienenstocks (1) angebrachte Temperaturmesssonde und ein Steuermodul (90), das im Inneren oder außerhalb des Bienenstocks (1) angebracht ist, wobei es elektrisch mit dem mindestens ein Heizelement (R1, R2, R3, R4) der heizenden strahlenden Trennwand (60-C) verbunden und ausgelegt ist, um, wenn das Steuermodul (90) mit Strom versorgt wird, die Temperaturmessungen der mindestens einen Sonde zu empfangen und die Temperatur im Inneren des Bienenstocks zwischen einer Mindesttemperatur und einer Höchsttemperatur zu regeln.

## Claims

1. A radiating partition (60) for a beehive (1), said hive (1) comprising a floor (30), a front wall (11A), two side walls (11C), a rear wall (11B) and a removable roof cover (20), **characterized in that** said radiating partition (60) comprises a rigid one-piece panel (61) made of at least one insulating material, of which at least one of its two faces (65) is at least partly covered with at least one layer of a radiating material (68), the radiating partition (60) being configured to be inserted between the front wall (11A) and the rear wall (11B) of the beehive (1) in order to insulate the interior of the hive (1).

2. The radiating partition (60) according to claim 1, wherein the layer of radiating material (68) has a thermal emissivity of less than 0.2.

3. The radiating partition (60) according to the preceding claim, wherein the layer of radiating material (68) has a thermal emissivity of less than 0.1.

4. The radiating partition (60) according to any one of the preceding claims, wherein the panel (61) is made of solid wood, plywood, oriented large particles or slatted wood.

5. The radiating partition (60) according to any one of the preceding claims, comprising at least one insertion member (66) capable of receiving an extracting tool (80) for the radiating partition (60) in order to extract the said radiating partition (60) from a hive (1).

6. The radiating partition (60) according to the preceding claim, the panel (61) being delimited by an upper edge (62), a lower edge (64), two lateral edges (63) and two faces (65), each of the faces connecting the upper edge (62), the lower edge (64) and the lateral edges (63), the insertion member is in the form of a groove (66) formed in the upper part of at least one of the two faces (65) of the radiating partition (60).

7. The radiating partition (60) according to any one of the preceding claims, wherein the radiating partition (60) is solid.

8. The radiating partition (60) according to any one of claims 1 to 6, wherein the radiating partition (60) delimits at least one through opening (67) in which is mounted a grid (70) adapted to prevent the queen of the hive (1) from passing through the opening (67) while allowing the worker bees to pass through.

9. The radiating partition (60) according to the preceding claim, comprising a bottom edge (64) and wherein the through opening (67) is disposed adjacent the bottom edge (64).

10. The radiating partition (60) according to any one of the preceding claims, known as "heated radiating partition" (60-C), comprising at least one integrated heating element.

11. A heated radiating partition (60-C) according to the preceding claim, wherein the at least one integrated heating element is of the resistance type.

12. The heated radiating partition (60-C) according to the preceding claim, comprising four longitudinally extending resistors mounted on one of the faces of the heated radiating partition (60-C), of which two are each disposed extending along a side edge of the panel (61), one is disposed extending along the lower edge of the panel (61) and one is disposed in the upper portion of the panel extending transversely.

13. A hive (1) for bees comprising a floor (30), a front wall (11A), two side walls (11C), a rear wall (11B), a removable roof cover (20), at least one body frame (50), each body frame (50) being in the form of a removable chassis of the hive (1), **characterized in that** said frame comprises four thin borders connected by metal wires between which is inserted a sheet of embossed wax allowing the production of honey by the bees, said hive further comprising at least one radiating partition (60) according to any one of the preceding claims.

14. The hive (1) according to the preceding claim, comprising at least one heated radiating partition (60-C) according to any one of claims 10 to 12.

15. The hive (1) according to the preceding claim, further comprising at least one temperature measurement probe placed inside the hive (1) and a control module (90) mounted inside or outside the hive (1) and electrically connected to the at least one heating element (R1, R2, R3, R4) of the heated radiating partition (60-C) and configured so as, when said control module (90) is electrically powered, to receive the temperature measurements from the at least one probe and to regulate the temperature inside the hive between a minimum temperature and a maximum temperature.
